# EUROPEAN PATENT APPLICATION

(11) **EP 4 105 538 A1**
(43) Date of publication of application: **21.12.2022**
(21) Application number: 21179575.2
(22) Date of filing: 15.06.2021
(51) Int. Cl.: F16M 11/28

(54) **TRANSPORTATION BOX AND MODULAR EQUIPMENT ASSEMBLY**

(71) Applicant: Prime Design Holding AB, 164 74 Kista (SE)
(72) Inventor: DAHLLÖF, Andrej, 174 62 SUNDBYBERG (SE); JENSEN, Troels Jakob, 7840 HØJSLEV (DK); ZETTERLUND, Rikard, 8800 VIBORG (DK)
(74) Representative: Brann AB

(57) **Abstract**

The proposed technology relates to a transportation box (12) for mounting on a pole. The transportation box (12) has a base side (16) and an opposite top side (18) and comprises a first casing part (20) and a second casing part (22) that are pivotally and can transition between closed position and an open position. In the closed position the first casing part (20) and the second casing part (22) jointly forms a storage compartment (24), a base aperture (26) in the base side (16), and a top aperture (28) in the top side (18), wherein the storage compartment (24), the base aperture (26), and the top aperture (28) are configured to allow the elongated object (14) to extend through the transportation box (12) via the base aperture (26) and the top aperture (28).

## Description

### Technical field

The proposed technology relates to the field of transportation boxed for manual handling. It specifically relates to transportation boxes for electrical equipment that is mounted on poles.

### Background

It is common to temporally install electrical or electronic equipment at a location, for example at emergency or building sites. The equipment is transported to the location in a box, unpacked from the box, used, packed in the box, and transported from the location in the box. When the boxes have been emptied from the equipment, an organizational effort is required to handle the boxes. Storage space is needed, and the boxes must be identified with the equipment they carry. This may be a particular problem in emergency situations where the attention of the people handling the installation is urgently needed elsewhere. It is also a problem if several temporal installations are made at the same location, such at a construction site, and the transportations boxes are mixed up after installation.

There is a need to be able to mount electrical, or electronic, equipment at an elevated position, such as a lamp for illuminating an area. This presents a problem in that the installation can become top-heavy, making it less stable and harder to move around. This is a particular problem if it installed on a pole extending vertically from a tripod that is not fixed to the ground.

There is also a need for simple and fast installations. This is particularly important in emergency situations. Controls for the electronic equipment must also be easy to find and to reach after installation.

### Object

The proposed technology aims at solving the problems and meeting the needs that are outlined above.

### Summary

According to a first aspect of the proposed technology, a transportation box, or transportation container, is provided for mounting on a straight elongated, or pole-like, object. The transportation box has a base side, or first side, and an opposite top side, or second side, and comprises: a first casing part, and a second casing part. The first casing part and the second casing part are pivotally connected allowing the first casing part and the second casing part to pivot relative to one another between a closed position, or closed state, and an open position, or open state. In the closed position the first casing part and the second casing part jointly forms a storage compartment, a base aperture, or first aperture, in the base side, and a top aperture, or second aperture, in the top side. The storage compartment, the base aperture, and the top aperture are configured, or arranged, to allow a straight passage through, or to allow the elongated object to extend through, the transportation box via the base aperture and the top aperture. Further, the storage compartment may be accessible, or revealed, in the open position.

It is understood that the transportation box is configured for manual handling or transport. This means that the weight and size are such that it can be handled by one or more persons without any lifting equipment. It may be configured for carrying by a single person. It is further understood that the transportation box is intended for transporting an item or equipment.

The first casing part and the second casing part may be the only components of the transportation box forming the storage compartment in the closed position. Both parts may be rigid.

The elongated object may be rigid. Further, it may have a circular cross section. It is understood that an elongated object is not limited to an object having a circular cross section. For example, the cross section may be square. The elongated object may be a pole, rail, or shaft. An elongated object is understood to have a longitudinal dimension, or longitudinal extension length, that is greater than its transverse dimension, or transverse extension length. It is further understood that the elongated object has a length that is greater than the distance between the base aperture and the top aperture.

The terms "base" and "top" are not to be construed as limiting features as such, for example indicating a specific orientation of the transportation box. If the elongated object is oriented in a vertical direction, the top side may be located above the base side when installed.

In the closed position, the transportation box may have an inside facing the storage compartment and an outside facing the surroundings of the transportation box. The first casing part and the second casing part may prevent removal of items or equipment placed in the storage compartment in the closed position. They may prevent access to the inside of the transportation box from the outside the transportation box in the closed position. The base aperture and the top aperture may allow access to the storage compartment from outside the transportation box. The base aperture and the top aperture may be the only openings of the transportation box in the closed position allowing access to the storage compartment.

A storage compartment is understood to be a space in which the item or equipment can be placed during transport. It is understood that the item or equipment can be removed from the transportation box only in the open position.

That the first casing part and the second casing part jointly forms the base aperture and the top aperture in the closed position means that the apertures are split, or broken, in the open position, which allows for the transportation box to be clamped on the elongated object with the elongated object extending through the storage compartment and exiting the storage compartment via base and top apertures. An aperture is understood to have an enclosing rim.

For each of the base aperture and the top aperture, the first casing part may form a first rim portion, and the second casing part may form a second rim portion, wherein the first rim portion and the second rim portion jointly form an enclosing rim of the aperture in the closed position. This means that in the open position, the first rim portions formed by the first casing portion can be placed at, or brought into contact with, the elongated object. After transition to the closed position, the second rim portions formed by the second casing portion are at, or brought into contact with, the elongated object, which then passes through the storage compartment via the base aperture and the top aperture. This allows for a sideways mounting of the transportation box on the elongated object.

The center of gravity of the transportation box may be at the straight passage, or at the elongated object, in the closed position.

In the closed position, the first casing part and the second casing part may jointly form an additional base aperture, or additional first aperture, in the base side, and an additional top aperture, or additional second aperture, in the top side. It is understood that the additional base aperture is separate from the base aperture, and that the additional top aperture is separate from the top aperture.

This allows for additional access to the storage compartment from outside the transportation box. The additional base aperture and the additional top aperture may be split, or broken, in the open position. If the equipment stored in the storage compartment is connected to the transportation box within the storage compartment by a flexible and elongated connecting module, such as an electrical cable, the connecting module can be arranged to extend through the additional base aperture or the additional top aperture when the equipment is removed from the storage compartment without disconnecting the connecting module.

The base aperture, top aperture, additional base aperture, and the additional top aperture may be the only openings of the transportation box giving access to the storage compartment in the closed position.

The base aperture and top aperture may be located at the geometric center, or center of gravity, of the base side and the top side, respectively. The additional base aperture and additional top aperture may be located off-center relative to the geometric center, or center of gravity, of the base side and the top side, respectively.

For each of the additional base aperture and the additional top aperture, the first casing part may form an additional first rim portion, and the second casing part may form an additional second rim portion, wherein the additional first rim portion and the additional second rim portion jointly forms an additional enclosing rim of the additional aperture in the closed position.

The additional base aperture and the additional top aperture may be arranged such that a straight line extending between them crosses, or is inclined with respect to, the straight passage, or the elongated object. Here, the straight line is understood as an abstraction or non-tangible object for indicating the relative positions of the additional apertures.

The transportation box may have a pivot side, or third side, at which the first casing part and the second casing part are pivotally connected, and an opposite separation side, or fourth side, at which the first casing part and the second casing part meet, or contact, only in the closed position, and are separated when transitioning from the closed position to the open position.

In the closed position, the additional base aperture may be positioned between the base aperture and the separation side, and the additional top aperture may be positioned between the top aperture and the pivot side, or vice versa.

In the closed position the storage compartment is understood to be located between the base side and the tope side and between the pivot side and the separation side.

The first casing part and the second casing part may be configured, or adapted, to pivot around a pivot axis that is parallel to or extending along, the straight passage, or along the elongated object. This allows for an easier alignment of the transportation when mounting it on the elongated object. In combination with the straight line extending between the additional base aperture and the additional top aperture being inclined, the parallel pivoting indicates to not to use these apertures when mounting the transportation box on the elongated object. The transportation box may further comprise: a hinge, or pivotable joint, connecting, or attached to, the first casing part and the second casing part and having a pivot axis, or axis of rotation, that is parallel to, or extending along, the straight passage, or along the elongated object.

The transportation box may further comprise: a first handle located on the first casing part, and a second handle located on the second casing part. The first handle and the second handle may be located on the top side. A handle is understood to allow an object to be grasped and manipulated by hand. The handles may be attached to or formed by the respective casing parts. The specified positions of the handles allow for an easier mounting on a vertical elongated object.

The base side and the top side may be planar and have a hexagonal shape in the closed position. The base side and the top side may have the same shape and size. The transportation box may have a hexagonal cross section at a point between the base side and the top side. The hexagonal cross section may correspond in shape and size to the hexagonal base and top sides. The transportation box may outline, or form, a cylinder having a hexagonal cross section with the base side and the top side closing the cylinder.

The transportation box may comprise: a lock configured, or arranged, to lock the first casing part and the second casing part together in the closed position. The lock may be operated by a removable key, a combination lock, or an electronic lock. The lock can be used to prevent unauthorized persons to open the transportation box once installed, or to keep it closed during transport. Additionally, if the transportation box has been installed on the elongated object, the lock can prevent it from being opened and removed from the elongated object.

According to a second aspect of the proposed technology, an assembly, or arrangement, is provided comprising: a transportation box according to the first aspect of the proposed technology, and equipment comprising a removable, or first, module and a fixed, or second, module. The removable module is stored, or supported, in the storage compartment in the closed position and manually removable form the storage compartment in the open position. The fixed module forms part of the transportation box. The fixed module may form part of the first casing part and may be located at the separation side of the transportation box.

It is understood that the removable module and the fixed module synergistically, or cooperate to, provide a function of the equipment. The fixed module forming part of the transportation box means that it is fixed to the transportation box. It may be removable only by using tools. It is understood that the removable module being manually removable encompasses it being removable without using any tools.

The removable module may comprise a fastener, or attachment, configured to releasably attached, or fixed, the removable module to the elongated object, for example at the end of a pole. The base aperture and the top aperture may be configured to allow passage of the elongated object, or have transverse dimension, or extension length, that is greater than the transverse dimension, or extension length, of the elongated object.

The removable equipment may comprise a lamp, a speaker, a video camera, and/or an antenna, such as a wi-fi or telecommunication antenna.

The equipment may further comprise a connecting, or third, module, wherein the connecting module is elongated and flexible, or has a flexible portion. It operationally connects the removable module and the fixed module. The connecting module may be stored, or supported, in the storage compartment in the closed position. It may be connected to the removable module and the fixed module inside the transportation box in the closed position.

It is understood that the modules synergistically, or cooperate to, provide a function of the equipment. The connecting module may be attached, or operationally connected, to the removable module and the fixed module in the closed position and in the open position. The connecting module may be wire-like or tube-like. It may be configured to extend through the additional top aperture, for example after installation of the assembly.

The equipment may be electrical, and/or electronic. The fixed module may be configured to control the function of the removable module. The connecting module may be an electrical cable. Electrical cables are here understood to encompass electrical wires for power supply and signal transfer. The electrical cable may be a coil cable.

The fixed module may comprise an electrical power source, or power supply. For example, the electrical power source may be a battery or an ac/dc converter. The electrical power source may be located inside the transportation box. The fixed module, or the electrical power source, may be located inside the transportation box in the closed position.

The equipment may further comprise a supply, communication, or fourth, module, wherein the supply module is elongated and flexible, or has a flexible portion. It is operationally connected to the fixed module. It may connect to the fixed module inside the transportation box in the closed position and in the open position. The supply module may be stored, or supported, in the storage compartment in the closed position. It may be configured to extend through the additional base aperture, for example after installation of the assembly. The supply module may be wire-like or tube-like, or have a wire-like or tube-like portion.

As described above, the fixed module may comprise an electrical power source. The supply module may comprise an electrical contact and an electrical power cable operationally connecting the electrical contact and the power source. It is understood that the electrical power supply can receive electric power via the electrical contact and the electrical power cable.

The fixed module may comprise a control unit configured for controlling the function of the removable module. The control unit and the electrical power supply may be operationally connected. For example, the control unit may be configured to regulate electrical power supply to the removable module.

The removable module may comprise a lamp configured to illuminate an area, the connecting module may be an electrical cable, the control unit may be configured to regulate electrical power supply to the lamp via the electric cable, and the power source may comprise an ac/dc converter. More specifically, the lamp may comprise an LED-array and the control unit may comprise an LED-driver or regulator.

As described above, the transportation box may have an inside facing the storage compartment and an outside facing the surroundings of the transportation box. The fixed equipment, or the control unit, may comprise a manual control interface accessible from outside the transportation box in the closed position. It is understood that the manual control interface allows for a manual control of the function of the equipment, or the function of the removable module. The manual control interface may comprise one or more knobs, levers, cock handles, buttons, keypads, or key switches, which are accessible from outside the transportation box in the closed position.

The transportation box may in the closed position form a depression on the outside and the manual control interface may be located within the depression. This means that the manual control interface does not extend from the transportation box, which allows for a placement on a planar surface with the manual control interface facing the planar surface.

The assembly may further comprise: a pole and the base aperture and the top aperture are configured to allow passage of the pole, or each aperture may have a transverse extension length that is greater than the transverse extension length of the pole. The pole may have a circular cross-section. It may have a uniform cross-section along its complete length. The transverse extension being greater means that the position of the transportation box can be shifted along the pole once installed.

The removable equipment may comprise a fastener, or attachment, configured to releasably attach, or fix, the removable equipment to the pole, such as at the end of a pole.

The assembly may further comprise a tripod connected to the pole and configured to support the pole in vertical orientation, or direction, when placed on a planar horizontal surface. The transportation box may be configured to rest on the tripod when mounted, or installed, on the pole.

### Brief description of the drawings

Preferred embodiments are described below in conjunction with the appended figures:
Figs. 1a-d showing different views of a transportation box in the closed position,
Fig. 2a-b showing different views of the transportation box of Figs. 1a-d in the open position,
Fig. 3a showing an assembly of a transportation box and electrical equipment with the transportation box in the open position and the electrical equipment arranged for storage in the storage compartment,
Fig. 3b showing the assembly of Fig. 3a with some of the components of the electrical equipment removed,
Fig. 4a showing the assembly of Fig. 3a further having a pole supported by a tripod with the transportation box in the open position before mounting on the pole, and
Fig. 4b showing the assembly of Fig. 4a with the transportation box mounted on the pole after installation.

### Description of the drawings

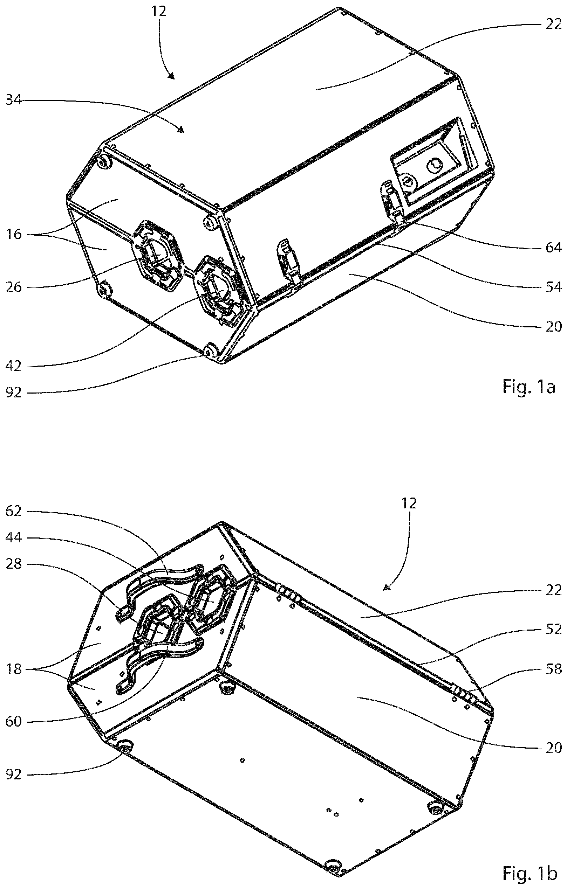

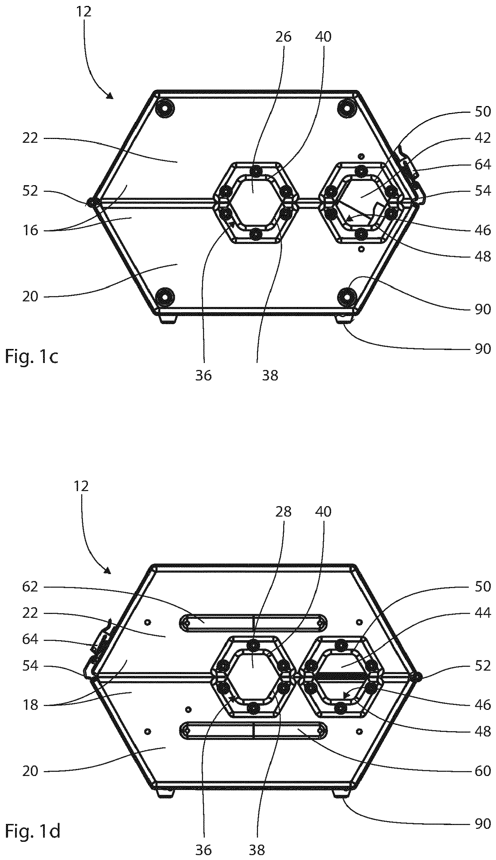

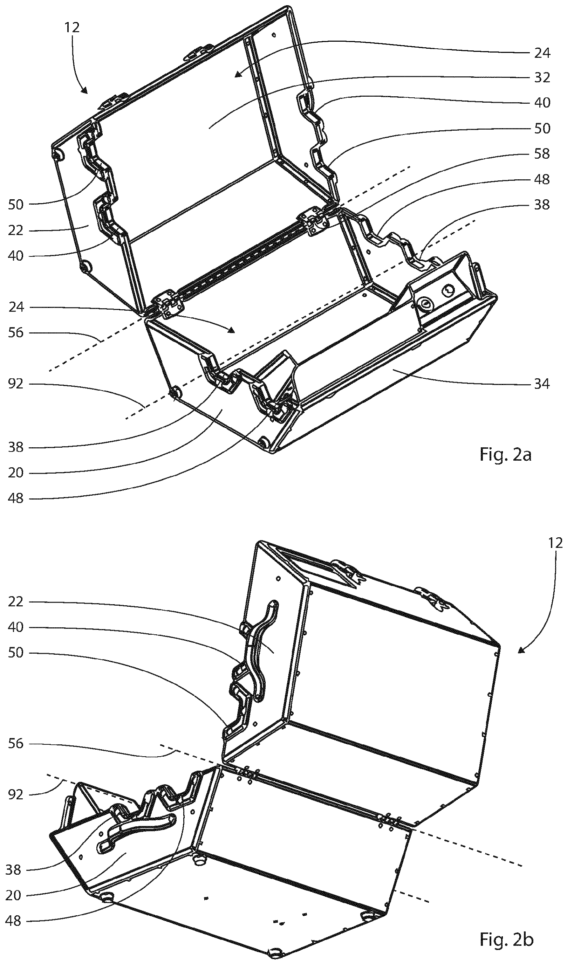

Different views of a transportation box 12 in a closed position are shown in Figs. 1a-d. The same transportation box 12 is shown in figs 2a-b in the open position. The transportation box 12 has a base side 16 and an opposite top side 18. It has a first casing part 20 and a second casing part 22. The casing parts 20 and 22 are pivotally connected by a hinge 58 and can pivot around a pivot axis 58. The hinge 58 is located at a pivot side 52 of the transportation box 12, and the first and second casing parts 20 and 22 meet at the opposite separation side 54 in the closed position, as shown in Figs. 1a-d. When changing to the open position shown in Figs. 2a-b, the first and second casing parts 20 and 22 are separated.

In the closed position the first and second casing parts 20 and 22 jointly forms a storage compartment 24 in the closed position. The storage compartment 24 is accessible in the open positions, as is shown in Fig. 2a. The transportation box has an inside 32 facing the storage compartment 24 and an outside 34 facing the surroundings of the transportation box 12.

The transportation box 12 has a base side 16 and an opposite top side 18. This means that in the closed position the storage compartment 24 is located between the base side 16 and the tope side 18, and between the pivot side 52 and the separation side 54. In the closed position, the base side 16 and the top 18 are planar, parallel, of the same size, oriented in the same way, and have the same hexagonal shape. Between the base and top sides 16 and 18, the transportation box 12 has a hexagonal cross section corresponding in orientation, size, and shape to the base and top sides 16 and 18. This means that the transportation box 12 outlines a cylinder with a hexagonal cross section.

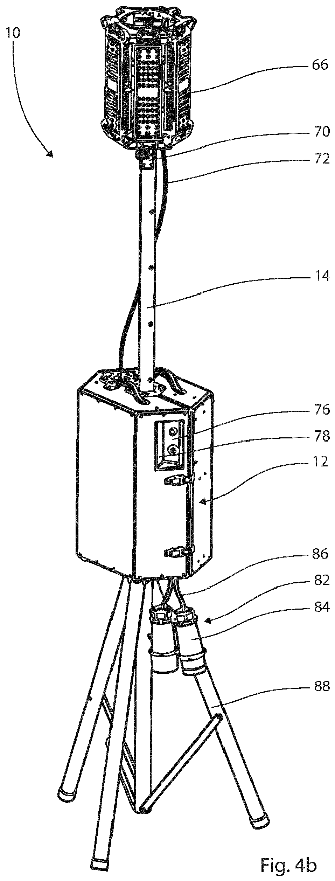

In the closed position, the transportation box 12 has a base aperture 26 in the base side 16 and a top aperture 28 in the top side 18. Both aperture 26 and 28 are located at the geometric center of respective sides 16 and 18. Further, both apertures 26 and 28 are open to the storage compartment 24 and are arranged so that a straight elongated object 14 in the form of a pole 14 can pass through the center of gravity of the transportation box 12 parallel to the pivot axis 52, as is shown in Fig. 4b. The pivot axis 56 and the central axis 92 of the pole 14 are indicated by parallel dashed lines in Figs. 2a-b.

Each aperture 26 and 28 has an enclosing rim 36. The first casing part 20 forms a first rim portion 38 of each aperture 26 and 28, and the second casing part 22 forms a second rim portion 40 of each aperture 26 and 28. When the transportation box 12 is in the closed position, the first rim portions 38 and the second rim portions 40 jointly form the enclosing rim 36 of the base aperture 26 and the top aperture 28, as shown in Figs. 1c-d.

In the closed position, the transportation box 12 further has an additional base aperture 42 in the base side 16 and an additional top aperture 28 in the top side 18. The additional base aperture 42 is located between the base aperture 26 and the separation side 54, while the additional top aperture 44 is located between the top aperture 26 and the pivot side 52. Both additional apertures 26 and 28 are open to the storage compartment 24 but are arranged such that no straight object can pass through them in parallel with the pivot axis 56.

Each additional aperture 42 and 44 has an additional enclosing rim 46. The first casing part 20 forms an additional first rim portion 48 of each additional aperture 42 and 44, and the second casing part 22 forms an additional second rim portion 50 of each additional aperture 42 and 44. When the transportation box 12 is in the closed position, the additional first rim portions 48 and the additional second rim portions 50 jointly forms the additional enclosing rim 46 of the additional base aperture 42 and the additional top aperture 44, as shown in Figs. 1c-d.

The transportation box 12 has a first handle 60 located on the first casing part 20 and a second handle 62 located on the second casing part 22. Both handles 60 and 62 are located on the top side 18 of the transportation box 12. The handles 60 and 62 allows the transportation box 12 to be carried and manipulated by single person using the hands.

The transportation box has a lock 64 at the separation side 54 that can lock the first casing part 20 and the second casing part 22 together in the closed position.

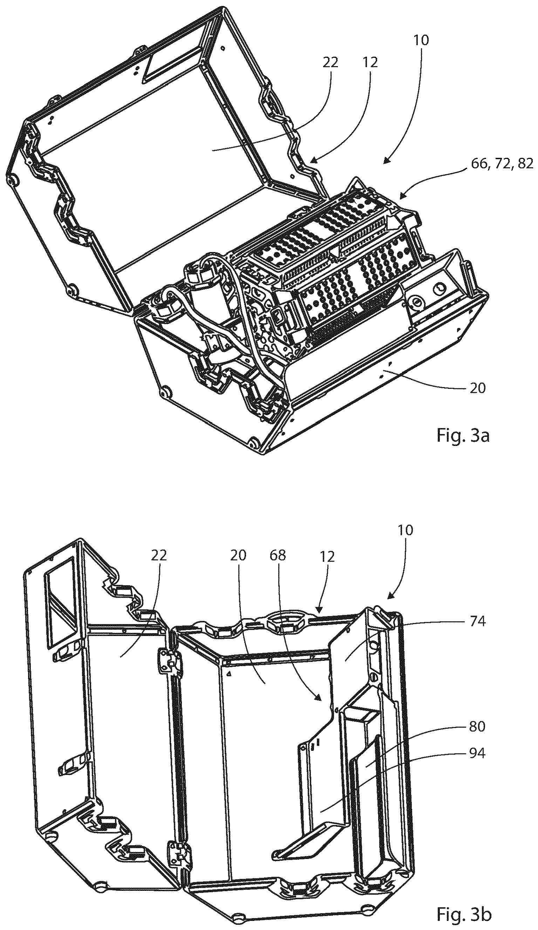

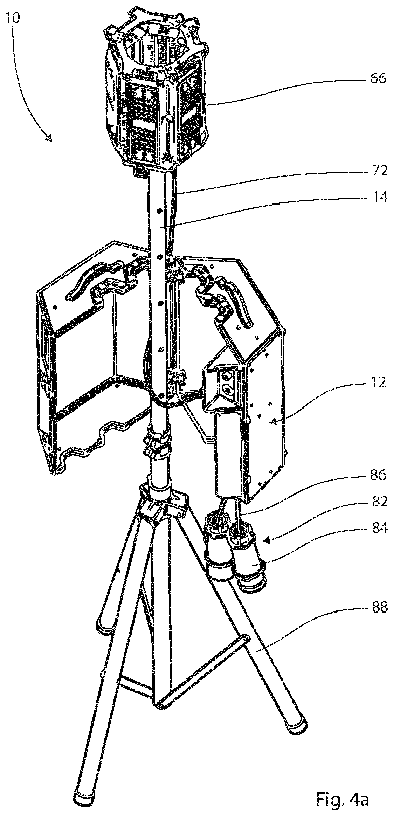

An assembly 10 including the above-described transportation box 12 is described with reference to Figs. 3a-b and 4a-b. The complete installed assembly 10 is shown in Fig. 4b. The assembly 10 further has electrical equipment composed of a removable module 66 in the form of a lamp 66 with several LED-arrays, a fixed module 68 that includes a power source 80 in the form of an ac/dc converter and a control unit 74 in the form of a LED-driver. The power source 80 and the control unit 74 are attached to the first casing part 20 on the inside 32 of the transportation box 12, thus forming part of the transportation box 12. The lamp 66 is stored in the storage compartment 24 during transport and is removed from the storage compartment 24 at installation.

The electrical equipment further has a connecting module 72 in the form of a flexible electrical cable 72 that is connected to the control unit 74 and the lamp 66 both at transport and installation. The electrical cable 72 is folded and stored in the storage compartment 24 during transport and extends through the additional base aperture 44 after installation.

When using the lamp 66, the power source 80 supplies the control unit 74 with electrical power, which in turn supplies the lamp 66 with electrical power via the electrical cable 74.

The electrical equipment further has a supply module 82 in the form of electrical contact 84 and a flexible electrical power cable 86 connected to the power source 80 and by which the power source 80 can be supplied with electrical power from the main grid. The electrical contact 84 and the electrical power cable 86 are stored in the storage compartment 24 during transport and the electrical cable extends through the additional base aperture 42 after installation such that the electrical contact 84 is accessible from outside the transportation box 12, as is shown in Fig. 4b.

The control unit 74 has a manual control interface 76 in the form of a key-switch for turning the lamp 66 on and off and a knob for regulating the brightness of the lamp 66. The manual control interface 76 is accessible from the outside 34 of the transportation box 12 in the closed position. It is located in a depression 78 such that the transportation box 12 can rest on flat surface with the control interface 76 facing the surface without the control interface 76 contacting surface.

The assembly further has an elongated object 14 in the form of a cylindrical pole 14 having a circular cross section, and a tripod 88 that supports the pole 14 in a vertical orientation after installation. The transportation box 12 is mounted on the pole 14 such that the latter extends through the base aperture 26 and the top aperture 28. The transportation box is oriented with the top side 18 above the base side 16. The pole 14 has a diameter that is smaller than the transverse extension length of the apertures 26 and 28 and the transportation box 12 can slide vertically relative to pole. This way, the transportation box 12 rests on the tripod 88 after installation.

The removable module 66 has a fastener 70 by which the lamp 66 is attached to the top of the pole 14 at installation. The transportation box 12 has rubber feet by which it can be supported on a planar surface. It further has a support 94 in the storage compartment 24 that supports the removable module 66 in the closed position.

### Item list

10 assembly
12 transportation box
14 elongated object or pole
16 base side
18 top side
20 first casing part
22 second casing part
24 storage compartment
26 base aperture
28 top aperture
30 item or equipment
32 inside
34 outside
36 enclosing rim
38 first rim portion
40 second rim portion
42 additional base aperture
44 additional top aperture
46 additional enclosing rim
48 additional first rim portion
50 additional second rim portion
52 pivot side
54 separation side
56 pivot axis
58 hinge
60 first handle
62 second handle
64 lock
66 removable module or lamp
68 fixed module
70 fastener
72 connecting module or electrical cable
74 control unit or driver
76 manual control interface
78 depression
80 power source or ac/dc converter
82 supply or communication module
84 electrical contact
86 electrical power cable
88 tripod
90 rubber feet
92 central axis of pole
94 support for removable module

## Claims

1. A transportation box (12) for mounting on a straight elongated object (14), wherein the transportation box (12) has a base side (16) and an opposite top side (18) and comprises:
- a first casing part (20), and
- a second casing part (22),
wherein
the first casing part (20) and the second casing part (22) are pivotally connected allowing the first casing part (20) and the second casing part (22) to pivot relative to one another between a closed position and an open position, wherein,
in the closed position, the first casing part (20) and the second casing part (22) jointly forms a storage compartment (24), a base aperture (26) in the base side (16), and a top aperture (28) in the top side (18),
wherein the storage compartment (24), the base aperture (26), and the top aperture (28) are configured to allow the elongated object (14) to extend through the transportation box (12) via the base aperture (26) and the top aperture (28), and the storage compartment (24) is accessible in the open position.

2. The transportation box (12) according to claim 1, wherein, for each of the base aperture (26) and the top aperture (28), the first casing part (20) forms a first rim portion (38), and the second casing part (22) forms a second rim portion (40), wherein the first rim portion (38) and the second rim portion (40) jointly form an enclosing rim (36) of the aperture (26, 28) in the closed position.

3. The transportation box (12) according to claim 1 or 2, wherein the base aperture (26) is located at the geometric center of the base side (16), and the top aperture (28) is located at the geometric center of the top side (18).

4. The transportation box (12) according to any of the claims 1 to 3, wherein, in the closed position, the first casing part (20) and the second casing part (22) jointly forms an additional base aperture (42) in the base side (16), and an additional top aperture (44) in the top side (18).

5. The transportation box (12) according to claim 4, wherein, for each of the additional base aperture (42) and the additional top aperture (44), the first casing part (20) forms an additional first rim portion (48), and the second casing part (22) forms an additional second rim portion (50), wherein the additional first rim portion (48) and the additional second rim portion (50) jointly forms an additional enclosing rim (46) of the additional aperture (42, 44) in the closed position.

6. The transportation box (12) according to claim 5 or 6, wherein the additional base aperture (42) and the additional top aperture (44) are arranged such that a straight line extending between them crosses the elongated object (14).

7. The transportation box (12) according to any of the claims 1 to 6, wherein the first casing part (20) and the second casing part (22) are configured to pivot around a pivot axis (56) that is parallel to the elongated object (14).

8. The transportation box (12) according to any of the claims 1 to 7 further comprising:
- a hinge (58) connecting the first casing part (20) and the second casing part (22) and having a pivot axis (56) that is parallel to the elongated object (14).

9. The transportation box (12) according to any of the claims 1 to 9 further comprising:
- a first handle (60) on the first casing part (20) and located on the top side (18), and
- a second handle (62) on the second casing part (22) and located on the top side (18).

10. An assembly (10) comprising:
- a transportation box (12) according to any of the claims 1 to 9,
- equipment comprising a removable module (66) and a fixed module (68), wherein the removable module (66) is stored in the storage compartment (24) in the closed position and removable form the storage compartment (24) in the open position, and the fixed module (68) forms part of the transportation box (12).

11. The assembly (10) according to claim 10, wherein the equipment further comprises a connecting module (72), wherein the connecting module (72) is flexible and elongated and operationally connects the removable module (66) and the fixed module (68).

12. The assembly (10) according to claim 11, wherein the equipment is electrical and the fixed module (68) is configured to control the function of the removable module (66), and the connecting module (72) is a flexible and elongated electrical cable (72).

13. The assembly (10) according to claim 12, wherein the the removable module (66) comprises a lamp (66), and the fixed module (68) comprises a control unit (74) configured to supply electrical power to the lamp (66) via the electrical cable (68).

14. The assembly (10) according to any of the claim 10 to 13, wherein the transportation box (12) has an inside (32) facing the storage compartment (24) and an outside (34) facing the surroundings of the transportation box (12), wherein the fixed module (68) comprises a manual control interface accessible from outside (34) the transportation box (12) in the closed position.

15. The assembly (10) according to any of the claims 10 to 14 further comprising a pole (14), wherein the removable equipment comprises a fastener (70) configured to releasably attach the removable equipment to the pole (14) and the base aperture (26) and the top aperture (28) are configured to allow passage of the pole (14).
